# EUROPEAN PATENT SPECIFICATION

(11) **EP 3 287 547 B1**
(45) Date of publication and mention of the grant of the patent: **13.09.2023**
(21) Application number: 16783149.4
(22) Date of filing: 19.04.2016
(51) Int. Cl.: C23F 1/28, B32B 15/08, C08L 101/00, B29C 45/14, B32B 38/10, C25D 5/48, C23C 18/16, C23C 18/38, B29K 705/12, B32B 38/00, B29K 705/10, C25D 3/12, C25D 3/30, C25D 3/34, C25D 3/46, C25D 3/54

(54) **METHOD FOR PRODUCING METAL/RESIN COMPOSITE STRUCTURE AND METHOD FOR PRODUCING SURFACE-ROUGHENED STEEL MEMBER**
VERFAHREN ZUR HERSTELLUNG EINER METALL-HARZ-VERBUNDSTRUKTUR UND VERFAHREN ZUR HERSTELLUNG EINES OBERFLÄCHENAUFGERAUTEN STAHLELEMENTS
PROCÉDÉ PERMETTANT DE PRODUIRE UNE STRUCTURE COMPOSITE MÉTAL/RÉSINE ET PROCÉDÉ PERMETTANT DE PRODUIRE UN ÉLÉMENT EN ACIER À SURFACE RUGUEUSE

(30) Priority: 21.04.2015 JP 2015087043
(43) Date of publication of application: 28.02.2018
(73) Proprietor: Mitsui Chemicals, Inc., Tokyo 104-0028 (JP)
(72) Inventor: INOUE Goro, Sodegaura-shi Chiba 299-0265 (JP); SUGITA Haruka, Sodegaura-shi Chiba 299-0265 (JP); OKUMURA Hiroshi, Sodegaura-shi Chiba 299-0265 (JP)
(74) Representative: J A Kemp LLP
(86) International application number: PCT/JP2016/062371
(87) International publication number: WO 2016/171128

(56) References cited:
- WO-A1-03/057446
- WO-A1-2008/047811
- CN-A- 104 264 140
- GB-A- 1 161 550
- JP-A- 2011 168 017
- US-A1- 2011 008 644
- US-A1- 2012 250 250

## Description

### TECHNICAL FIELD

The present invention relates to a manufacturing method of a metal/resin composite structure and a manufacturing method of a surface-roughened steel member.

### BACKGROUND ART

A technology of bonding and integrating a steel member and a resin is, for example, necessary in wide industrial fields such as parts manufacturing industries of vehicles, building structures, household appliances, medical equipment, and industrial equipment.

In recent years, as a technology of bonding and integrating a resin member and a metal member, a method of bonding a resin member and a metal member by directly performing injection molding of the resin member to the metal member, which is a so-called "injection bonding method" has been proposed, instead of a technology of using an adhesive (for example, Patent Documents 1 and 2).

In the injection bonding method, for example, a resin member and a metal member are bonded to each other by performing injection molding of an engineering plastic including a polar group having affinity with a metal member to the metal member having a surface on which fine concavities and convexities are formed (for example, Patent Documents 1 and 2). However, the metal member showing strong adhesiveness in the injection bonding method is limited to aluminum-based metal, magnesium-based metal, copper-based metal, and titanium-based metal. In addition, polyolefin not including a polar group as a resin kind also has low adhesiveness.

A technology of bonding stainless steel as a steel member and a resin to each other is also disclosed (for example, Patent Documents 3 to 7).

Patent Document 3 (Pamphlet of International Publication No. 2008/081933) discloses a technology of bonding roughened stainless steel obtained by performing mechanical processing with respect to a base material formed of stainless steel and dipping the base material into a sulfuric acid aqueous solution or the like, and a resin to each other.

Patent Document 4 (Pamphlet of International Publication No. 2009/011398) or Patent Document 5 (Japanese Unexamined Patent Publication No. 2011-156764) discloses a technology of bonding stainless steel obtained by performing mechanical processing with respect to a steel member, dipping the steel member in a sulfuric acid aqueous solution or the like, and dipping the steel member in an amine aqueous solution or the like, and a resin to each other.

Patent Document 6 (Japanese Unexamined Patent Publication No. 2011-168017) discloses a bonded body of stainless steel processed by being dipped in a processing solution obtained by melting an oxidative compound in a ferric chloride aqueous solution, and a resin.

Patent Document 8 relates to the combination of a polymer layer and a metal layer to form a multi-layer structure.

Patent Document 9 describes a technique for integrating a galvanized steel sheet and a resin molded article.

Patent Document 10 describes a method for producing a composite product comprising a plastic body and a covering formed from a metal blank which at least over part of its surface is stuck to the plastic body.

### RELATED DOCUMENT

### PATENT DOCUMENT

[Patent Document 1] Pamphlet of International Publication No. 2003/064150
[Patent Document 2] Pamphlet of International Publication No. 2004/055248
[Patent Document 3] Pamphlet of International Publication No. 2008/081933
[Patent Document 4] Pamphlet of International Publication No. 2009/011398
[Patent Document 5] Japanese Unexamined Patent Publication No. 2011-156764
[Patent Document 6] Japanese Unexamined Patent Publication No. 2011-168017
[Patent Document 7] Japanese Unexamined Patent Publication No. 2001-011662
[Patent Document 8] US Patent Application Publication No. 2012/0250250 A1
[Patent Document 9] US Patent Application Publication No. 2011/0008644 A1
[Patent Document 10] Pamphlet of International Publication No. 2003/057446

### SUMMARY OF THE INVENTION

### TECHNICAL PROBLEM

According to research of the inventors, it was clear that bonding strength of a metal/resin composite structure obtained by methods disclosed in Patent Documents 1 to 6 was not sufficiently satisfied. Particularly, it was clear that bonding strength of a metal/resin composite structure is deteriorated, in a case of using a thermoplastic resin having low affinity with a steel member, such as a polyolefin-based resin, as a thermoplastic resin member.

Here, Patent Document 7 (Japanese Unexamined Patent Publication No. 2001-011662) discloses a method of roughening a stainless steel surface by using an aqueous solution including sulfuric acid, chlorine ion, cupric ion, and a thiol-based compound. However, according to an examination and a resin bonding test of the inventors, it was clear that a metal/resin composite structure having adhesiveness sufficient for a practical use is not obtained by the method disclosed in Patent Document 7.

That is, development of a surface roughening technology of a steel member exhibiting high adhesiveness with respect to a thermoplastic resin such as a polyolefin-based resin having low affinity with the steel member, and a bonded body of a steel member roughened by the roughening technology and a broad range of resin kinds have been desired from the industry.

The invention is made in consideration of these circumstances and an object thereof is to provide a manufacturing method of a metal/resin composite structure capable of obtaining a metal/resin composite structure in which a thermoplastic resin is strongly bonded and fixed to a steel member, and a manufacturing method of a surface-roughened steel member capable of being strongly bonded and fixed to a thermoplastic resin.

### SOLUTION TO PROBLEM

The inventors have performed various studies regarding a roughening method of a surface of a steel member suitable to be bonded to a thermoplastic resin. As a result, the inventors have found that a roughened surface of a steel member obtained by a surface roughening method including a step of applying a metal plating layer formed of a metal having smaller ionization tendency than that of iron and including a roughened surface, to a surface of a steel member, a step of processing the surface of the metal plating layer with inorganic acid, and a step of removing the metal plating layer from at least the bonding portion surface, can be strongly bonded, not only to engineering plastic, but even with respect to a thermoplastic resin having low affinity with a steel member such as a polyolefin-based resin, and thus, the invention has completed.

That is, according to the invention, a manufacturing method of a metal/resin composite structure and a manufacturing method of a surface roughened steel member are provided.

### ADVANTAGEOUS EFFECTS OF INVENTION

According to the invention, it is possible to provide a manufacturing method of a metal/resin composite structure capable of obtaining a metal/resin composite structure in which a thermoplastic resin is strongly bonded and fixed to a steel member, and a manufacturing method of a surface-roughened steel member capable of being strongly bonded and fixed to a thermoplastic resin.

### BRIEF DESCRIPTION OF THE DRAWINGS

The above-described object and other objects, features, and advantages will become more apparent by preferred embodiments described below and the following accompanying drawings.

FIG. 1 is an outline view schematically showing an example of a structure of a metal/resin composite structure according to an embodiment.
FIG. 2 is a view showing a sectional SIM image of a steel member after finishing a first step of Reference Example 1.
FIG. 3 is a view showing a sectional SIM image of a steel member 1 after finishing a second step of Reference Example 1.
FIG. 4 is a view showing a sectional SIM image of a steel member 2 after finishing a third step of Example 1.

### DESCRIPTION OF EMBODIMENTS

Hereinafter, embodiments of the invention will be described with reference to the drawings. In all drawings, the same reference numerals are used for the same constituent elements and the description thereof will not be repeated. A term "to" indicating a range of numbers in this document means an expression "equal to or more than A and equal to or less than B" , if not otherwise specified.

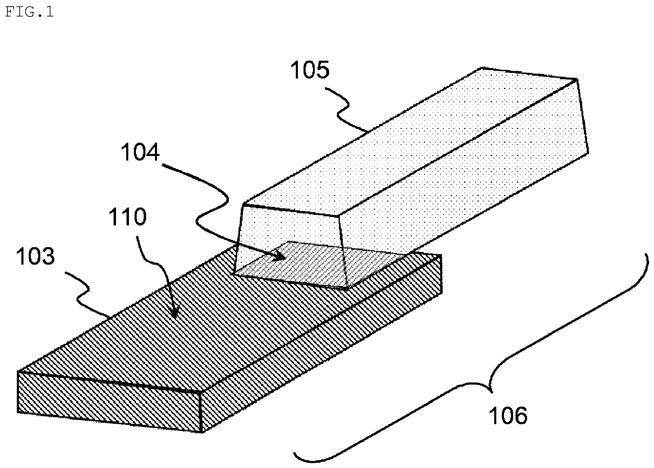

FIG. 1 is an outline view schematically showing an example of a structure of a metal/resin composite structure 106 according to the embodiment. The metal/resin composite structure 106 according to the embodiment is obtained by bonding a steel member 103 which is roughened by a specific processing method, and a thermoplastic resin member 105 formed of a thermoplastic resin (P1) or a resin composition (P2) including the thermoplastic resin (P1), to each other, and bonding the steel member 103 and the thermoplastic resin member 105 to each other.

Hereinafter, the thermoplastic resin member 105, a manufacturing method of the steel member 103 (also referred to as a surface-roughened steel member) , and a manufacturing method of the metal/resin composite structure 106 will be described in this order.

### [thermoplastic resin member]

Hereinafter, the thermoplastic resin member 105 according to the embodiment will be described.

The thermoplastic resin member 105 is formed of the thermoplastic resin (P1) or the resin composition (P2) including the thermoplastic resin (P1). The resin composition (P2) includes the thermoplastic resin (P1) as a resin component, and if necessary, a filling material (B). The resin composition (P2) further includes other compounding agents, if necessary. The resin composition (P2) includes the thermoplastic resin (P1) as a main component. In the embodiment, the "main component" is defined as a constituent component occupying 50% by weight or more. A content of the thermoplastic resin (P1) occupying the resin composition (P2) is preferably greater than 50% by weight and more preferably equal to or greater than 60% by weight.

### (Thermoplastic Resin (P1))

The thermoplastic resin (P1) is not particularly limited, and examples thereof include a polyolefin-based resin, a polymethacryl-based resin such as a polymethyl methacrylate resin, a polyacryl-based resin such as a polymethyl acrylate resin, a polystyrene resin, a polyvinyl alcohol-polyvinyl chloride copolymer resin, a polyvinyl acetal resin, a polyvinyl butyral resin, a polyvinyl formal resin, a polymethyl pentene resin, a maleic anhydride-styrene copolymer resin, a polycarbonate resin, a polyphenylene ether resin, aromatic polyether ketone such as a polyether ether ketone resin or a polyether ketone resin, a polyester-based resin, a polyamide-based resin, a polyamide imide resin, a polyimide resin, a polyether imide resin, a styrene-based elastomer, a polyolefin-based elastomer, a polyurethane-based elastomer, a polyester-based elastomer, a polyamide elastomer, an ionomer, an aminopolyacrylamide resin, an isobutylene maleic anhydride copolymer, ABS, ACS, AES, AS, ASA, MBS, an ethylene-vinyl chloride copolymer, an ethylene-vinyl acetate copolymer, an ethylene-vinyl acetate-vinyl chloride graft polymer, an ethylene-vinyl alcohol copolymer, a chlorinated polyvinyl chloride resin, a chlorinated polyethylene resin, a chlorinated polypropylene resin, a carboxyvinyl polymer, a ketone resin, an amorphous copolyester resin, a norbornene resin, fluoroplastic, a polytetrafluoroethylene resin, a fluorinated ethylene polypropylene resin, PFA, a polychlorofluoroethylene resin, an ethylene tetrafluoroethylene copolymer, a polyvinylidene fluoride resin, a polyvinyl fluoride resin, a tetrafluoroethylene-perfluoroalkyl vinyl ether resin, a polyarylate resin, a thermoplastic polyimide resin, a polyvinylidene chloride resin, a polyvinyl chloride resin, a polyvinyl acetate resin, a polysulfone resin, a polyparamethylstyrene resin, a polyallylamine resin, a polyvinyl ether resin, a polyphenylene oxide resin, a polyphenylene sulfide (PPS) resin, a polymethyl pentene resin, oligoester acrylate, a xylene resin, a maleic acid resin, a polyhydroxybutyrate resin, a polysulfone resin, a polylactic acid resin, a polyglutamic acid resin, a polycaprolactone resin, a polyethersulfone resin, a polyacrylonitrile resin, and a styrene-acrylonitrile copolymer resin. These thermoplastic resins may be used alone or in combination of two or more kinds thereof.

Among these, as the thermoplastic resin (P1), one kind or two or more kinds of thermoplastic resins selected from a polyolefin-based resin, a polyester-based resin, and a polyamide-based resin is suitably used, from a viewpoint of more effectively obtaining an effect of improving bonding strength between the steel member 103 and the thermoplastic resin member 105.

As the polyolefin-based resin, a polymer obtained by polymerizing olefin can be used without particular limitation.

As olefin configuring the polyolefin-based resin, ethylene, α-olefin, or cyclic olefin is used.

As the α-olefin, linear or branched α-olefin having 3 to 30 carbon atoms or preferably 3 to 20 carbon atoms is used. More specifically, examples thereof include propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, and 1-eicosene.

As the cyclic olefin, cyclic olefin having 3 to 30 carbon atoms is used and the number of carbon atoms is preferably 3 to 20. More specifically, examples thereof include cyclopentene, cycloheptene, norbornene, 5-methyl-2-norbornene, tetracyclododecene, 2-methyl-1,4,5,8-dimethano-1,2,3,4,4a, 5,8,8a-octahydronaphthalene.

Preferable examples of olefin configuring the polyolefin-based resin include ethylene, propylene, 1-butene, 1-pentene, 3-methyl-1-butene, 1-hexene, 4-methyl-1-pentene, and 3-methyl-1-pentene.

Among these, ethylene, propylene, 1-butene, 1-hexene, and 4-methyl-1-pentene are more preferably used and ethylene or propylene is even more preferably used.

The polyolefin-based resin may be obtained by polymerizing the olefin alone or may be obtained by combining two or more kinds with each other and performing a random copolymerization, a block copolymerization, or a graft copolymerization.

The polyolefin-based resin may have a linear or branched structure.

Examples of the polyester-based resin include an aliphatic polyester such as polylactic acid, polyglycolic acid, polycaprolactone, or polyethylene succinate, polyethylene terephthalate, polyethylene naphthalate, polybutylene terephthalate (PBT), and polycyclohexylenedimethylene terephthalate (PCT).

Examples of the polyamide-based resin include ring-opening polymerization type aliphatic polyamide such as PA6 or PA12; polycondensation type polyamide such as PA66, PA46, PA610, PA612, or PA11; semi-aromatic polyamide such as MXD6, PA6T, PA9T, PA6T/66, PA6T/6, or Amorphous PA; whole aromatic polyamide such as poly (p-phenylene terephthalamide), poly (m-phenylene terephthalamide), or poly (m-phenylene isophthalamide), and an amide-based elastomer.

As the thermoplastic resin (P1), one kind or two or more kinds of thermoplastic resins selected from thermoplastic resins having a glass transition temperature equal to or higher than 140°C and amorphous thermoplastic resins is suitably used, from a viewpoint of more effectively obtaining an effect of improving bonding strength between the steel member 103 and the thermoplastic resin member 105.

Examples of the thermoplastic resin having a glass transition temperature equal to or higher than 140°C include one kind or two or more kinds selected from a polycarbonate resin, aromatic polyether ketone such as a polyetheretherketone resin, or a polyetherketone resin, a polyimide resin, and a polyethersulfone resin.

Examples of the amorphous thermoplastic resin include a polystyrene resin, a polyacrylonitrile resin, a styrene-acrylonitrile copolymer resin, an acrylonitrile-butadiene-styrene copolymer resin (ABS resin), a polymethylmethacrylate resin, and a polycarbonate resin.

Among these, as the thermoplastic resin (P1), one kind or two or more kinds of thermoplastic resin selected from a polyolefin-based resin, a polyester-based resin, a polyamide-based resin, a polycarbonate resin, a polyether ether ketone resin, a polyether ketone resin, a polyimide resin, a polyether sulfone resin, a polystyrene resin, a polyacrylonitrile resin, a styrene-acrylonitrile copolymer resin, an acrylonitrile-butadiene-styrene copolymer resin, and a polymethyl methacrylate resin, from a viewpoint of more effectively obtaining an effect of improving bonding strength between the steel member 103 and the thermoplastic resin member 105.

### (filling material (B))

The resin composition (P2) may further include the filling material (B), from viewpoints of adjustment of a difference in coefficients of linear expansion between the steel member 103 and the thermoplastic resin member 105, improvement of mechanical strength of the thermoplastic resin member 105, improvement of heat cycle properties, and the like.

Examples of the filling material (B) include a fibrous filling material, a granular filling material, and a plate-like filling material. Examples of the fibrous filling material include a glass fiber, a carbon fiber, and an aramid fiber. As a specific example of the glass fiber, chopped stands having an average fiber diameter of 6 to 14 µm are used. Examples of the granular filling material and the plate-like filling material include pulverized materials of calcium carbonate, mica, glass flakes, a glass balloon, magnesium carbonate, silica, talc, clay, a glass fiber, a carbon fiber, and an aramid fiber. These filling material (B) may be used alone or in combination of two or more kinds thereof.

In a case where the resin composition (P2) includes the filling material (B), the content thereof is normally equal to or smaller than 50% by weight, preferably smaller than 50% by weight, and more preferably smaller than 40% by weight, with respect to 100% by mass of the total of the resin composition (P2). A lower limit of the content of the filling material (B) is preferably equal to or greater than 5% by weight and more preferably equal to or greater than 10% by weight.

The filling material (B) has an effect of controlling a coefficient of linear expansion of the thermoplastic resin member 105, in addition to an effect of increasing rigidity of the thermoplastic resin member 105. Particularly, in a case of a composite of the steel member 103 and the thermoplastic resin member 105 of the embodiment, temperature dependency of morphological stability is greatly different between the steel member 103 and the thermoplastic resin member 105, in many cases, and thus, in a case where a great temperature change occurs, a strain easily occurs in the composite. By including the filling material (B) in the thermoplastic resin member 105, it is possible to decrease the strain. By setting the content of the filling material (B) to be in the range described above, it is possible to prevent a decrease in toughness.

In the embodiment, the filling material (B) is preferably the fibrous filling material, more preferably a glass fiber or a carbon fiber, and particularly preferably a glass fiber.

Accordingly, it is possible to prevent shrinkage of the thermoplastic resin member 105 after molding, and therefore, it is possible to realize stronger bonding between the steel member 103 and the thermoplastic resin member 105.

### (Other Compounding Agents)

The resin composition (P2) may include other compounding agents, in order to impart various functions.

Examples of the compounding agent include a heat stabilizer, an antioxidant, a pigment, a weathering agent, a flame retardant, a plasticizer, a dispersant, a lubricant, a release agent, an antistatic agent.

### (Preparation method of resin composition (P2))

The preparation method of the resin composition (P2) is not particularly limited, and normally, the resin composition (P2) can be prepared by a well-known method. For example, the following method is used. First, the thermoplastic resin (P1), if necessary, the filling material (B), and if necessary, other compounding agents are mixed or melt-mixed by using a mixing device such as a Banbury mixer, a single screw extruder, a twin-screw extruder, or a high-speed twin-screw extruder, and thereby obtaining the resin composition (P2)

### [Manufacturing Method of Surface-Roughened Steel Member]

The manufacturing method of the surface-roughened steel member according to the embodiment is a manufacturing method of a surface-roughened steel member used to be bonded to the thermoplastic resin member 105 formed of the thermoplastic resin (P1) or the resin composition including the thermoplastic resin (P2), includes at least two steps of a first step and a second step below, and further includes a third step after the second step.
(First Step) A step of applying a metal plating layer that is formed of a metal having smaller ionization tendency than that of iron and including a roughened surface on a side opposite to a surface to be in contact with the steel member 103, to at least a bonding portion surface 104 of the steel member 103 to be bonded to the thermoplastic resin member 105
(Second Step) A step of processing at least the surface of the metal plating layer with inorganic acid
(Third Step) A step of removing at least the metal plating layer from the bonding portion surface 104

First, the steel member of the embodiment indicates a component material which is formed of a ferrous material and having a predetermined structure. Here, the steel member includes all of common steel (carbon steel) and special steel, and is, for example carbon steel such as a rolled steel for a general structure, low temperature steel, or a steel sheet material for a nuclear reactor, and examples of ferrous material include cold-rolled steel material (hereinafter, referred to as "SPCC"), a hot-rolled steel material (hereinafter, referred to as "SPHC"), a hot-rolled steel sheet material for an automotive structure (hereinafter, referred to as "SAPH"), a hot-rolled high-tensile steel sheet material for automobile processing (hereinafter, referred to as "SPFH"). Most of these can be subjected to press working or cutting working, and thus, in a case where the materials described above are used as a component or a main body, a structure and a shape can also be freely selected. The ferrous material described in the embodiment is not limited to a steel material, and includes all sorts of ferrous materials standardized based on Japanese Industrial Standard (JIS "SS400"). As the steel member 103, a steel member formed of at least one kind selected from stainless steel and rolled mild steel is preferable.

A shape of the steel member 103 is not particularly limited, as long as the steel member can be bonded to the thermoplastic resin member 105, and a flat plate shape, a curved plate shape, a rod shape, a tube shape, or a lump shape can be used, for example. A structure obtained by combining these with each other may be used.

A shape of the bonding portion surface 104 to be bonded to the thermoplastic resin member 105 is not particularly limited, and a flat surface or a curved surface is used.

It is preferable that the steel member 103 is subjected to a roughening treatment which will be described later, after being processing to the predetermined shape, by plastic processing performed by cutting or pressing of the steel material, punching processing, and removing processing such as cutting, polishing, or electrical discharge machining. That is, a member which is processed to a necessary shape by various processing methods is preferably used.

Next, each step will be described in detail.

### (First Step)

The first step is a step of applying a metal plating layer including a roughened surface on a side opposite to a surface to be bonded to a steel member, by a well-known method. The smaller ionization tendency of metal kinds forming the metal plating layer than that of iron is essential condition in the embodiment. Examples of metal having smaller ionization tendency than that of iron include Ni, Sn, Pb, Cu, and Hg, Ag. Ni, Sn, and Cu are desired, because these are easily available (not rare metal), these are not poisonous metal, and an economic method of the plating on a surface of steel has been established.

The inventors have made studies regarding a degree of roughening of the surface on a side opposite to the surface to be in contact with the steel member after the plating, and found that copper (Cu) is particularly desired, among the three kinds of metal kinds. The metal plating layer includes a copper plating. As a method of plating the surface of the steel member, for example, a method of processing a steel member obtained by if necessary, degreasing with a degreasing agent for a steel material or a detergent and being washed with water, by using an aqueous solution including acid, cupric ion, and chlorine ion. The first step includes a step of applying a copper plating to the bonding portion surface with an aqueous solution including acid, cupric ion, and chlorine ion.

By this first step, a copper plating layer having a concavo-convex shape is formed on a surface 110 of the steel member 103.

As the aqueous solution including acid, cupric ion, and chlorine ion, an aqueous solution including 15 to 70% by weight of acid, 0.3 to 9.5% by weight and preferably 1 to 7% by weight of cupric ion, and at least 0.01% by weight and preferably 0.02 to 6% by weight of chlorine ion, is preferable. The aqueous solution may include a thiol-based compound, if necessary, and in a case of including a thiol-based compound, an aqueous solution including 0.00001 to 1% by weight and preferably 0.00005 to 1% by weight of the thiol-based compound is preferable.

Examples of acid include inorganic acid such as hydrochloric acid, hydrobromic acid, sulfuric acid, nitric acid, phosphoric acid, perchloric acid, or sulfamic acid, and organic acid such as sulfonic acid or carboxylic acid. Examples of the carboxylic acid include formic acid, acetic acid, citric acid, oxalic acid, and malic acid. As acid, sulfuric acid is preferable.

Examples of chlorine ion source compound include sodium chloride, potassium chloride, and ammonium chloride.

Examples of cupric ion source compound include cupric chloride, cupric nitrate, cupric sulfate, cupric acetate, and cupric hydroxide.

Examples of thiol-based compound include thiol acids such as thioformic acid, thioacetic acid, or thiopropionic acid; thiocarboxylic acids such as thioglycolic acid, thiodiglycolic acid, thiolactic acid, or thiomalic acid; and aromatic thiocarboxylic acids such as thiosalicylic acid or thiofumaric acid.

A processing temperature is normally 20°C to 50°C and a processing time is normally 20 seconds to 10 minutes. After the first step, water washing and drying are performed, if necessary.

### (Second Step)

In the second step, the surface of the metal plating layer obtained in the first step is processed with inorganic acid. As the inorganic acid, hydrochloric acid, hydrobromic acid, phosphoric acid, sulfuric acid, or nitric acid is preferably used. Nitric acid is preferably used from a viewpoint of a chemical etching power of iron.

Concentration of the inorganic acid is preferably 1 to 40% by weight, more preferably 5 to 30% by weight, and even more preferably 10 to 25% by weight. A processing temperature is normally 20°C to 50°C and a processing time is normally 20 seconds to 120 seconds. As described later with examples, by performing this second step, it is possible to dramatically improve adhesiveness to the thermoplastic resin which was not obtained in a case of performing only the first step.

The inventors have surmised the reason thereof as follows. That is, by performing the second step, an inorganic acid aqueous solution penetrates the surface of the steel member from concave portions of the metal plating layer having a concavo-convex shape generated on the surface of the steel member in the first step, that is, from a portion close to the steel member, iron having larger ionization tendency than that of metal configuring the metal plating layer is preferentially subjected to chemical etching, and thus, a plurality of concave portions (pits) including an overhang portion are formed on the surface 110 of the steel member. It is assumed that such concave portions including an overhang portion contribute to improvement of adhesiveness to the thermoplastic resin member 105 by an anchor effect.

After the second step, water washing and drying are performed, if necessary.

### (Third Step)

The third step is a step arbitrarily performed and is performed after the second step. In a case where metal having smaller ionization tendency than that of iron is in contact with the upper portion of the steel member, corrosion (galvanic corrosion) of iron may occur during a long-term storage, and thus, for the use in which it is desired to avoid such corrosion as much as possible, for example, the use for an electronic material, the third step is performed.

The third step is a step of processing at least the bonding portion surface 104 of the steel member 103 with, for example, a metal plating peeling solution and removing a part or all of the metal plating layer. In the embodiment, the third step of removing copper plating which is preferred metal plating can be performed based on a method disclosed in Japanese Unexamined Patent Publication No. 2002-356788, for example. As a processing solution used in the third step, for example, a solution including ammonia copper complex salt is used. More specifically, a copper plating peeling solution which is an alkali aqueous solution including a copper (II) ammine complex and includes anions of organic acid as counter ions is used. The peeling solution may be prepared based on content disclosed in Japanese Unexamined Patent Publication No. 2002-356788, and a commercially available peeling solution may be processed according to treatment recommended by makers. In examples which will be described later, Melstrip Cu-3940 manufactured by Meltex Inc. was used. A processing temperature of the third step is normally 20°C to 60°C and preferably 30°C to 50°C, and a processing time is normally 20 to 120 seconds and preferably 30 to 90 seconds. After the third step, water washing and drying are performed, if necessary. After finishing the third step, a water washing operation arbitrarily performed is not particularly limited, as long as it is performed under condition of removing smut generated in the second and/or the third step. The processing time is preferably 0.5 to 20 minutes.

### [Manufacturing Method of Metal/Resin Composite Structure]

Next, the manufacturing method of the metal/resin composite structure 106 will be described.

The manufacturing method of the metal/resin composite structure 106 includes at least the following steps (i) and (ii).
(i) Step of manufacturing a surface-roughened steel member
(ii) Step of molding the thermoplastic resin member 105 and bonding the steel member 103 and the thermoplastic resin member 105, so that at least a part of the thermoplastic resin member 105 is in contact with the bonding portion surface 104 of the steel member 103.

That is, the metal/resin composite structure is obtained by bonding the thermoplastic resin (P1) or the resin composition (P2) to the steel member 103 subjected to the surface roughening treatment (surface-roughened steel member) while molding so as to have a desired shape of the thermoplastic resin member 105.

Specific description thereof is as follows.

First, the step (i) of manufacturing method of the surface-roughened steel member can be performed in the same manner as in the manufacturing method of the surface-roughened steel member described above. Here, the description will not be repeated.

Next, the step (ii) will be described. Hereinafter, a case of using injection molding as a molding method will be described as an example.

First, a die is prepared, the die is opened, and the steel member 103 including at least a roughened part of the surface is installed in a cavity portion (space portion). Then, the die is closed, the thermoplastic resin (P1) or the resin composition (P2) including the thermoplastic resin (P1) is injected and solidified in the cavity portion of the die, so that at least a part of the thermoplastic resin member 105 is in contact with the bonding portion surface 104 of the steel member 103, and the steel member 103 and the thermoplastic resin member 105 are bonded to each other. After that, by opening and releasing the die, the metal/resin composite structure 106 can be obtained. As the die, for example, a die for injection molding which is generally used in a high-speed heat cycle molding (RHCM, heating and cooling molding) can be used.

As the manufacturing method of the metal/resin composite structure 106 according to the embodiment, the injection molding method is preferably used as described above, and a method of molding by suitably combining other molding methods with the injection molding method, or other molding methods instead of the injection molding method may be used. Examples of the other molding method include a transfer molding method, a compression molding method (compression molding method), a reaction injection molding method, a blow molding method, a heat forming method, and a press forming method.

### [Use for metal/resin composite structure]

The metal/resin composite structure 106 according to the embodiment has high productivity and a high degree of freedom of shape controlling, and can be expanded to various uses.

The metal/resin composite structure 106 according to the embodiment has excellent adhesiveness between a resin and a steel member, mechanical properties, rust-preventing properties, heat resistance, friction resistance, sliding properties, airtightness, and watertightness, and for example, in a case of using the metal/resin composite structure 106 as a component for a structure, an effect of reducing weight due to a decrease in the usage of the steel member in a structural component can also be exhibited, and thus, the metal/resin composite structure can be used in a wide range of various uses according to the properties.

Examples thereof include structural components for a car, car-mounted components, a housing of an electronic device, a housing of an household electrical appliance, a building member, structural components, mechanical components, components for various vehicles, components for an electronic device, the purpose for household goods such as furniture, or kitchenware, medical equipment, components of construction materials, other structural components or exterior components.

More specifically, examples thereof include the following components which are designed so that a portion having insufficient strength just with the resin, is supported by the metal. In vehicles, an instrument panel, a console box, door knobs, door trim, a shift lever, pedals, a glove box, a bumper, a hood, fenders, a trunk, doors, a roof, a pillar, seats, a radiator, an oil pan, a steering wheel, an ECU box, and electrical parts are used. In construction or household goods, glass window frames, handrails, curtain rail, a chest of drawers, drawer, closet, a bookshelf, a desk, and a chair are used. A connector, a relay, and gears are used as precise electronic components. A transport container, a suitcase, and a trunk are used as transportation containers.

A component used in a machine designed to have optimal heat management by combining thermal conductivity of the steel member 103 and the heat insulating properties of the thermoplastic resin member 105, for example, various electric appliances can also be used. Household appliances such as a refrigerator, a washing machine, a vacuum cleaner, a microwave oven, an air conditioner, lighting equipment, an electric kettle, a TV, a clock, a ventilating fan, a projector, and speakers, and electronic information devices such as a computer, a mobile phone, a smart phone, a digital camera, a tablet PC, a portable music player, a portable game machine, a charger, and a battery are used.

In regards to this, by roughening the surface of the steel member 103, the surface area is increased, and thus, a contact surface area between the steel member 103 and the thermoplastic resin member 105 is increased and heat resistance of a contact interface can be reduced.

For other uses, toys, sports equipment, shoes, sandals, bags, tableware such as forks, knifes, spoons, and dishes, stationery such as a ball pen or a pacer, a file, and a binder, cookware such as a pan or a pot, a kettle, a spatula, a ladle, a perforated ladle, a whisk, and a tong, components for lithium ion secondary battery, and a robot are used.

Hereinabove, the usage of the metal/resin composite structure 106 according to the embodiment has been described, but these are examples of the usage of the invention and various other configurations can be used.

Hereinabove, the embodiments of the invention has been described, but these are merely examples of the invention and various other configurations can be used.

### [Examples]

Hereinafter, the embodiments will be described in detail with reference to examples and comparative examples. The embodiments are not limited to these examples.

### [Reference Example 1]

### (First Step)

A commercially available cold-rolled steel material mild steel SPCC having a thickness of 2 mm was cut to have a rectangular shape having a size of 18 mm × 45 mm and a test piece for processing was prepared. 7 pieces thereof were dipped (without oscillation) in an aqueous solution at 60°C obtained by diluted to have 5% by weight of a commercially available degreasing agent NE-6 (manufactured by Meltex Inc.), for 5 minutes so that the test pieces were not overlapped with each other, and then, water washing (with oscillation) for 5 seconds was repeated three times. Then, the first step was performed under the conditions disclosed in Example 3 of Japanese Unexamined Patent Publication No. 2001-011662. That is, the 7 degreased test pieces were dipped (without oscillation) in an aqueous solution at 30°C including 50% by weight of sulfuric acid, 3% by weight of cupric sulphate pentahydrate, 3% by weight of potassium chloride, and 0.0001% by weight of thiosalicylic acid, for 5 minutes so that the test pieces were not overlapped with each other. Next, water washing (with oscillation) for 30 seconds under ultrasonic irradiation was repeated three times, and accordingly, the first step was finished.

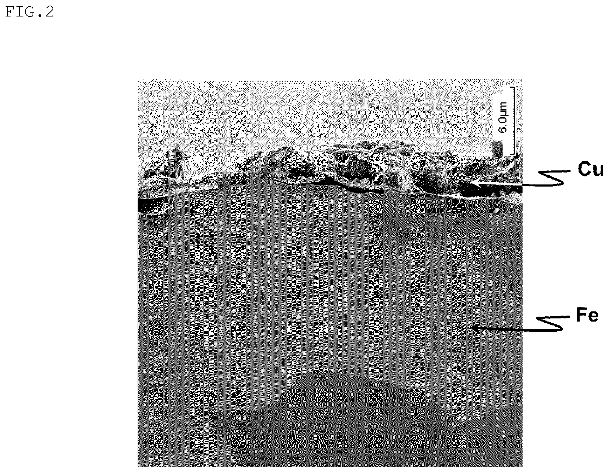

Fig. 2 shows a sectional SIM image (scanning ion microscope image) of the steel member after finishing the first step. Form FIG. 2, it was found that the copper plating layer including a roughened surface on a side opposite to the surface to be in contact with the steel member was applied to the surface of the steel member.

### (Second Step)

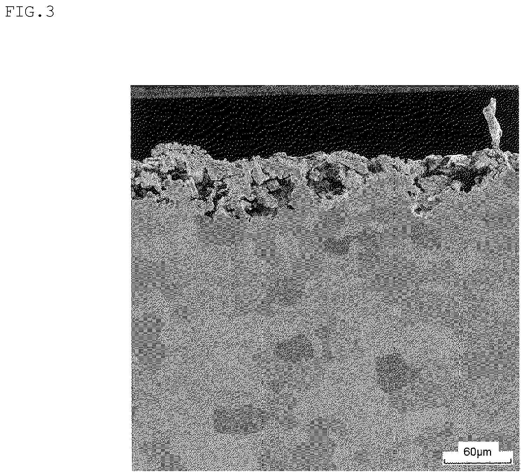

The 7 test pieces obtained in the first step was dipped (without oscillation) in 20% by weight of nitric acid aqueous solution for 90 seconds so that the test pieces were not overlapped with each other. A temperature of the aqueous solution at this time was maintained at 40°C. After that, water washing (with oscillation) for 20 seconds was repeated three times, drying was performed in a drier set to 80°C for 15 minutes, and accordingly, the second step was finished. An average weight decreasing rate of the test piece after finishing the second step was 4. 9% by weight. Hereinafter, the test piece subjected up to the second step is referred to as a steel member 1. Fig. 3 shows a sectional SIM image of the steel member 1 after finishing the second step. From fig. 3, it was found that the surface of the steel member which is below the copper plating layer was roughened.

### (Injection Step)

A small dumbbell metal insert die was mounted on J85AD110H manufactured by The Japan Steel Works, LTD. and the steel member 1 obtained through the first step and the second step described above was installed in the die. Then, the injection molding of a commercially available glass fiber-containing propylene polymer (Prime Polypro V7100 manufactured by Prime Polymer Co. , Ltd., density of 1030 kg/m³, containing 20% by weight of glass fiber (GF), MFR of a polypropylene-based polymer: 18 g/10 min) (hereinafter, abbreviated as GF-PP), as the thermoplastic resin, was performed in the die under conditions of a cylinder temperature of 250°C, a die temperature of 120° C, an injection rate of 25 mm/sec, holding pressure of 80 MPa, and holding time of 10 seconds, and a metal/resin composite structure was obtained. The same injection molding was performed with respect to other two steel members 1.

### (Evaluation Method of Bonding Strength)

The measurement was performed using a tensile strength tester "model 1323 (manufactured by Aikoh Engineering Co., Ltd.)" and attaching a dedicated jig to the tensile strength tester, under conditions of room temperature (23°C), a distance between chucks of 60 mm, and a tensile rate of 10 mm/min. The bonding strength calculated by dividing a breaking weight (N) by an area of the metal/resin bonded portion was measured regarding three test samples. The obtained results are shown in Table 1.

### [Reference Example 2]

A metal/resin composite structure was manufactured in the same manner as in Reference Example 1, except that a commercially available glass fiber-containing polyamide resin (Amilan 1011G30 manufactured by Toray Industries, Inc., containing 30% by weight of GF) (hereinafter, abbreviated as GF-PA) was used as the thermoplastic resin, and the cylinder temperature was set as 280°C and the die temperature was set as 160°C in the injection molding conditions and bonding strength was measured. The obtained results are shown in Table 1.

### [Example 1]

### (Third Step)

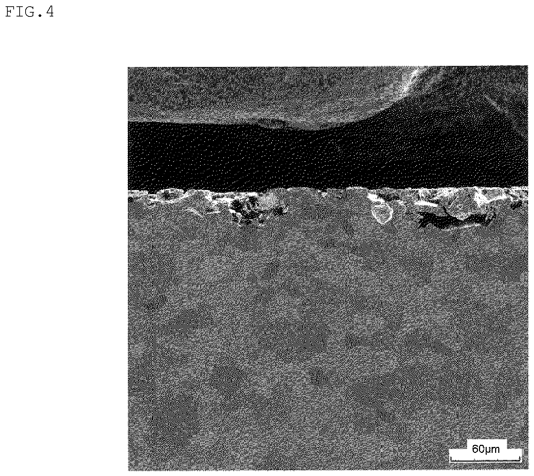

The 7 test pieces subjected to the second step in the completely same method as in Reference Example 1 were dipped in a copper plating peeling agent (Melstrip Cu-3940 manufactured by Meltex Inc.) at 40°C for 1 minute, so that the test pieces were not in contact with each other. After that, water washing (with oscillation) for 20 seconds under ultrasonic irradiation was repeated three times. Then, drying was performed in a drier set to 80°C for 15 minutes, and accordingly, the third step was finished. An average weight decreasing rate of the test piece after finishing the third step was 3.1% by weight. Hereinafter, the test piece subjected up to the third step is referred to as a steel member 2. Fig. 4 shows a sectional SIM image of the steel member 2 after finishing the second step. From Fig. 4, it was found that the surface of the steel member from which the copper plating layer is peeled, was roughened.

Regarding the steel member 2, the glass fiber-containing propylene polymer (GF-PP) was subjected to injection molding by the injection molding method disclosed in Reference Example 1, a metal/resin composite structure was manufactured and bonding strength was measured. The obtained results are shown in Table 1.

### [Example 2]

A steel member 3 was obtained by performing the first step to the third step in the same manner as those in Example 1, except that the aqueous solution including sulfuric acid, cupric sulphate pentahydrate, potassium chloride, and thiosalicylic acid which was used in the first step of Example 1 was changed to an aqueous solution at 30°C including 50% by weight of sulfuric acid, 3% by weight of cupric sulphate pentahydrate, and 3% by weight of potassium chloride. A metal/resin composite structure was manufactured and bonding strength was measured in the completely same manner as in Example 1. The obtained results are shown in Table 1.

### [Comparative Example 1]

In Reference Example 1, the first step was performed. After that, water washing (with oscillation) for 20 seconds under the ultrasonic irradiation was repeated three times, drying was performed in a drier set to 80°C for 15 minutes, and accordingly, a steel member 4 was obtained. Regarding the steel member 4, the glass fiber-containing propylene polymer (GF-PP) was subjected to injection molding by the injection molding method disclosed in Reference Example 1, a metal/resin composite structure was manufactured and bonding strength was measured. The obtained results are shown in Table 1.

**[Table 1]**

| | | Reference Example 1 | Reference Example 2 | Example 1 | Example 2 | Comparative Example 1 |
|---|---|---|---|---|---|---|
| Steel member (SPCC) Number | | *1* | | *2* | *3* | *4* |
| First step | | Performed | | Performed | | Performed |
| Second step | | Performed | | Performed | | Not performed |
| Third step | | Not performed | | Performed | | Not performed |
| Thermoplastic resin member | | *GF-PP* | *GF-PA* | *GF-PP* | *GF-PP* | *GF-PP* |
| Bonding strength | Average value regarding three samples (MPa) | 27 | 52 | 23 | 22 | 14 |

## Claims

1. A manufacturing method of a surface roughened steel member used to be bonded to a thermoplastic resin member (105) formed of a thermoplastic resin (P1) or a resin composition (P2) including the thermoplastic resin (P1), the method comprising:
a first step of applying a metal plating layer that is formed of a metal having smaller ionization tendency than ionization tendency of iron and including a roughened surface on a side opposite to a surface to be in contact with the steel member (103), to at least a bonding portion surface (104) of the steel member (103) to be bonded to the thermoplastic resin member (105), the metal plating layer includes a copper plating; and
a second step of processing at least the surface of the metal plating layer with inorganic acid, **characterized in that** the method further comprises a third step of removing the metal plating layer from at least the bonding portion surface, after the second step, and the first step includes a step of applying a copper plating to the bonding portion surface with an aqueous solution including acid, cupric ion, and chlorine ion.

2. The manufacturing method of a surface roughened steel member according to claim 1,
wherein the inorganic acid used in the second step is nitric acid.

3. The manufacturing method of a surface roughened steel member according to claim 1 or 2,
wherein the third step of removing the metal plating layer includes a step of performing a process with a metal plating peeling solution.

4. The manufacturing method of a surface roughened steel member according to claim 3,
wherein the metal plating peeling solution is a copper plating peeling solution.

5. The manufacturing method of a surface roughened steel member according to any one of claims 1 to 4,
wherein the steel member is formed of at least one kind selected from stainless steel and rolled mild steel.

6. A manufacturing method of a metal/resin composite structure (106) obtained by bonding a steel member (103) and a thermoplastic resin member (105) formed of a thermoplastic resin (P1) or a resin composition (P2) including the thermoplastic resin (P1), to each other, the method comprising:
a step of obtaining a surface roughened steel member by using the manufacturing method according to any one of claims 1 to 5; and
a step of molding the thermoplastic resin member and bonding the steel member and the thermoplastic resin member, so that at least a part of the thermoplastic resin member is in contact with the bonding portion surface of the steel member.

7. The manufacturing method of a metal/resin composite structure according to claim 6,
wherein the thermoplastic resin includes one kind or two or more kinds selected from a polyolefin-based resin, a polyester-based resin, a polyamide-based resin, a polycarbonate resin, a polyether ether ketone resin, a polyether ketone resin, a polyimide resin, a polyether sulfone resin, a polystyrene resin, a polyacrylonitrile resin, a styrene-acrylonitrile copolymer resin, an acrylonitrile-butadiene-styrene copolymer resin, and a polymethylmethacrylate resin.

## Patentansprüche

1. Verfahren zur Herstellung eines oberflächenaufgerauhten Stahlelements, das dazu verwendet wird, mit einem Element aus thermoplastischem Harz (105) verbunden zu werden, das aus einem thermoplastischen Harz (P1) oder einer Harzzusammensetzung (P2), die das thermoplastische Harz (P1) enthält, gebildet ist, wobei das Verfahren Folgendes umfasst:
einen ersten Schritt des Aufbringens einer Metallplattierungsschicht, die aus einem Metall gebildet ist, das eine geringere Ionisierungstendenz als die Ionisierungstendenz von Eisen aufweist und eine aufgeraute Oberfläche auf einer Seite enthält, die einer mit dem Stahlelement (103) in Kontakt zu bringenden Oberfläche gegenüberliegt, auf mindestens eine Oberfläche (104) eines Verbindungsabschnitts des Stahlelements (103), der mit dem thermoplastischen Harzelement (105) verbunden werden soll, wobei die Metallplattierungsschicht eine Kupferplattierung enthält; und
einen zweiten Schritt des Bearbeitens mindestens der Oberfläche der Metallplattierungsschicht mit anorganischer Säure, **dadurch gekennzeichnet, dass**
das Verfahren ferner einen dritten Schritt des Entfernens der Metallplattierungsschicht von mindestens der Oberfläche des verbindenden Abschnitts nach dem zweiten Schritt umfasst, und
der erste Schritt einen Schritt des Aufbringens einer Kupferplattierung auf die Oberfläche des verbindenden Abschnitts mit einer wässrigen Lösung enthält, die Säure, Kupfer(II)-Ionen und Chlor-Ionen enthält.

2. Verfahren zur Herstellung eines oberflächenaufgerauten Stahlelements nach Anspruch 1,
wobei die im zweiten Schritt verwendete anorganische Säure Salpetersäure ist.

3. Verfahren zur Herstellung eines oberflächenaufgerauhten Stahlelements nach Anspruch 1 oder 2,
wobei der dritte Schritt des Entfernens der Metallplattierungsschicht einen Schritt des Durchführens eines Verfahrens mit einer Metallplattierungsabziehlösung enthält.

4. Verfahren zur Herstellung eines oberflächenaufgerauten Stahlelements nach Anspruch 3,
wobei die Metallplattierungsablöselösung eine Kupferplattierungsablöselösung ist.

5. Verfahren zur Herstellung eines oberflächenaufgerauhten Stahlelements nach einem der Ansprüche 1 bis 4,
wobei das Stahlelement aus mindestens einer Art, ausgewählt aus rostfreiem Stahl und gewalztem Baustahl, gebildet wird.

6. Verfahren zur Herstellung einer Metall/Harz-Verbundstruktur (106), die erhalten wird, durch miteinander Verbinden eines Stahlelements (103) und eines thermoplastischen Harzelements (105), das aus einem thermoplastischen Harz (P1) oder einer Harzzusammensetzung (P2), die das thermoplastische Harz (P1) enthält, gebildet ist, wobei das Verfahren Folgendes umfasst:
einen Schritt des Erhaltens eines oberflächenaufgerauten Stahlelements durch Anwendung des Herstellungsverfahrens nach einem der Ansprüche 1 bis 5; und
einen Schritt des Formens des thermoplastischen Harzelements und des Verbindens des Stahlelements und des thermoplastischen Harzelements, so dass mindestens ein Teil des thermoplastischen Harzelements in Kontakt mit der Oberfläche des verbindenden Abschnitts des Stahlelements ist.

7. Verfahren zur Herstellung einer Metall/Harz-Verbundstruktur nach Anspruch 6,
wobei das thermoplastische Harz eine Art oder zwei oder mehr Arten enthält, die ausgewählt sind aus einem Harz auf Polyolefinbasis, einem Harz auf Polyesterbasis, einem Harz auf Polyamidbasis, einem Polycarbonatharz, einem Polyetheretherketonharz, einem Polyetherketonharz, einem Polyimidharz, einem Polyethersulfonharz, einem Polystyrolharz, einem Polyacrylnitrilharz, einem Styrol-Acrylnitril-Copolymerharz, einem Acrylnitril-Butadien-Styrol-Copolymerharz und einem Polymethylmethacrylatharz.

## Revendications

1. Procédé de fabrication d'un élément en acier à surface rugueuse utilisé pour être lié à un élément en résine thermoplastique (105) formé d'une résine thermoplastique (P1) ou d'une composition de résine (P2) comprenant la résine thermoplastique (P1), le procédé comprenant :
une première étape d'application d'une couche de placage métallique qui est formée d'un métal ayant une tendance à l'ionisation inférieure à la tendance à l'ionisation du fer et comprenant une surface rugueuse sur un côté opposé à une surface devant être en contact avec l'élément en acier (103), à au moins au moins une surface de partie de liaison (104) de l'élément en acier (103) à lier à l'élément en résine thermoplastique (105), la couche de placage métallique comprend un placage de cuivre ; et
une deuxième étape de traitement d'au moins la surface de la couche de placage métallique avec un acide inorganique, **caractérisé en ce que** le procédé comprend en outre une troisième étape d'élimination de la couche de placage métallique d'au moins la surface de la partie de liaison, après la deuxième étape, et
la première étape comprend une étape d'application d'un placage de cuivre sur la surface de la partie de liaison avec une solution aqueuse comprenant de l'acide, des ions cuivriques et des ions chlore.

2. Procédé de fabrication d'un élément en acier à surface rugueuse selon la revendication 1, dans lequel l'acide inorganique utilisé dans la seconde étape est l'acide nitrique.

3. Procédé de fabrication d'un élément en acier à surface rugueuse selon la revendication 1 ou 2,
dans lequel la troisième étape d'élimination de la couche de placage métallique comprend une étape d'exécution d'un processus avec une solution de pelage de placage métallique.

4. Procédé de fabrication d'un élément en acier à surface rugueuse selon la revendication 3, dans lequel la solution de pelage de placage métallique est une solution de pelage de placage de cuivre.

5. Procédé de fabrication d'un élément en acier à surface rugueuse selon l'une quelconque des revendications 1 à 4,
dans lequel l'élément en acier est formé d'au moins un type choisi parmi l'acier inoxydable et l'acier doux laminé.

6. Procédé de fabrication d'une structure composite métal/résine (106) obtenue en liant un élément en acier (103) et un élément en résine thermoplastique (105) formé d'une résine thermoplastique (P1) ou d'une composition de résine (P2) comprenant la résine thermoplastique (P1), l'un à l'autre, le procédé comprenant :
une étape d'obtention d'un élément en acier à surface rugueuse en utilisant le procédé de fabrication selon l'une quelconque des revendications 1 à 5 ; et
une étape de moulage de l'élément en résine thermoplastique et de liaison de l'élément en acier et de l'élément en résine thermoplastique, de sorte qu'au moins une partie de l'élément en résine thermoplastique soit en contact avec la surface de la partie de liaison de l'élément en acier.

7. Procédé de fabrication d'une structure composite métal/résine selon la revendication 6, dans lequel la résine thermoplastique comprend un type ou deux ou plusieurs types choisis parmi une résine à base de polyoléfine, une résine à base de polyester, une résine à base de polyamide, une résine de polycarbonate, une résine de polyéther éther cétone, une résine de polyéther cétone, une résine de polyimide, une résine de polyéther sulfone, une résine de polystyrène, une résine de polyacrylonitrile, une résine de copolymère styrène-acrylonitrile, une résine de copolymère acrylonitrile-butadiène-styrène et une résine de polyméthacrylate de méthyle.
